# FASCICULE DE BREVET EUROPEEN

(11) **EP 2 052 503 B1**
(45) Date de publication et mention de la délivrance du brevet: **17.12.2014**
(21) Numéro de dépôt: 07802584.8
(22) Date de dépôt: 13.08.2007
(51) Int. Cl.: H04L 12/70

(54) **PROCEDE D'OPTIMISATION DU TRANSFERT D'INFORMATIONS DANS UN RESEAU DE TELECOMMUNICATION**
VERFAHREN ZUM OPTIMIEREN DES TRANSFERS VON INFORMATIONEN IN EINEM TELEKOMMUNIKATIONSNETZ
METHOD FOR OPTIMIZING THE TRANSFER OF INFORMATION IN A TELECOMMUNICATION NETWORK

(30) Priorité: 16.08.2006 FR 0653377
(43) Date de publication de la demande: 29.04.2009
(73) Titulaire: IPANEMA TECHNOLOGIES, 92260 Fontenay aux Roses (FR)
(72) Inventeur: LYONNET, Frank, F-92340 Bourg la Reine (FR); DELATTRE, Michel, F-92110 Boulogne Billancourt (FR)
(74) Mandataire: Ilgart, Jean-Christophe
(86) Numéro de dépôt international: PCT/EP2007/058352
(87) Numéro de publication internationale: WO 2008/025666

(56) Documents cités:
- FR-A1- 2 842 677
- US-A- 5 359 593
- LYONNET: "Le réseau au service des applications" TELINDUS ARCHE, MEETING POINT, [Online] 30 mai 2006 (2006-05-30), XP002421957 Paris Extrait de l'Internet: URL:http://www.arche.fr/Actualit%C3%A9s/Ev %C3%A9nements/MeetingPoint/tabid/105/Defau lt.aspx> [extrait le 2007-02-22]

## Description

### DOMAINE TECHNIQUE

L'invention se situe dans le domaine des réseaux de télécommunication et concerne plus spécifiquement un procédé d'optimisation du transfert d'informations dans un réseau de télécommunication comportant une pluralité de producteurs d'informations Pᵢ, une pluralité de consommateurs d'informations Cⱼ, et des moyens de transfert desdites informations entre lesdits producteurs et lesdits consommateurs dans le cadre d'une pluralité d'applications Aₖ.

L'invention concerne également un dispositif d'optimisation du transfert d'informations dans un réseau de télécommunication comportant une pluralité de producteurs d'informations, une pluralité de consommateurs d'informations et des moyens de transfert desdites informations entre lesdits producteurs et lesdits consommateurs.

### ÉTAT DE LA TECHNIQUE ANTÉRIEURE

Le paramétrage d'un système d'optimisation du transfert d'information d'un réseau de communication visant à maximiser la performance perçue par les consommateurs est une opération complexe, notamment du fait qu'il est difficile d'établir un lien entre les paramètres du système et la performance perçue dans un contexte où la consommation d'information et les moyens de transfert varient.

En effet, les systèmes d'optimisation du transfert d'information d'un réseau de communication connus sont paramétrés selon des critères propres aux moyens de transfert et/ou à la consommation d'information sans lien direct avec la performance perçue.

En outre, dans les procédés d'optimisation du transfert d'information de l'art antérieur, les niveaux de qualité de service convenus entre opérateurs et utilisateurs de services, c'est-à-dire les SLA (Service Level Agreement), ne sont pas déclinés en paramètres exprimant la performance perçue mais en paramètres SLS (Service Level Spécifications) exprimant la performance du transfert d'information en mode paquet tels que la gigue, le délai, la perte, ou encore la disponibilité du service.

Ces systèmes sont généralement paramétrés en fonction d'une estimation de l'impact d'une certaine valeur de paramètre sur la performance perçue. Ces paramètres sont aussi dépendants des moyens de transfert et de la consommation d'information et doivent être révisés à chaque fois que les moyens de transfert et/ou la consommation d'information varieNT de manière importante. Dans des réseaux de communications comprenant de nombreux changements en termes de moyens de transfert et/ou de consommation d'information, cette tâche devient humainement impossible. Il en résulte que la performance perçue par l'utilisateur final d'un service n'est pas maîtrisée.

Le brevet EP 1252744 de la demanderesse décrit un procédé et un dispositif d'optimisation dynamique de la qualité de service dans un réseau de transmission de données en mode paquet, dans lequel une pluralité de sources Si et une pluralité de destinations Di sont reliées à un réseau de transit via une pluralité de réseaux d'accès, chaque source étant susceptible d'envoyer un débit maximal L_{max,s,x,} et chaque destination étant susceptible de recevoir un débit maximal L_{max,x,d,} lesdites sources comportant chacune un moyen de classification et de contrôle du débit de données émis. Le procédé décrit dans ce document optimise la qualité du transfert de l'information selon des paramètres consistant en des objectifs exprimés en performances quantifiables limitées aux paramètres SLS d'un service de transmission paquet alors que le service attendu d'un réseau de communication est un service de transfert d'informations. Il ne permet pas de traduire directement des objectifs de performance perçue. De ce fait, les mécanismes d'optimisation peuvent ne pas donner les résultats escomptés et il y a une réelle difficulté à réaliser la traduction des objectifs.

Le but de l'invention est de pallier les insuffisances de l'art antérieur décrits ci-dessus au moyen d'un procédé et d'un dispositif qui adaptent automatiquement et en permanence les transferts d'information en observant les résultats en terme de qualité d'expérience QoE représentant la capacité d'un consommateur à exploiter l'information transférée dans le cadre d'une application quelconque mise en oeuvre dans le réseau.

Le document « Le réseau au service des applications, TELINDUS ARCH. MEETING POINT » est une présentation commerciale d'une solution visant à maximiser la performance applicative dans un réseau en optimisant les ressources réseau et en dimensionnant le réseau en fonction des objectifs des performances applicatives souhaités.

Le document FR 2 842 677 décrit un procédé de dimensionnement de la capacité d'un réseau de télécommunication en fonction de l'utilisation effective des ressources réseau.

### EXPOSÉ DE L'INVENTION

L'invention préconise un procédé d'optimisation du transfert d'informations dans un réseau de télécommunication comportant une pluralité de producteurs d'informations Pᵢ, une pluralité de consommateurs d'informations Cⱼ, et des moyens de transfert desdites informations entre lesdits producteurs et lesdits consommateurs dans le cadre d'une pluralité d'applications Aₖ.

Le procédé selon l'invention comporte les étapes suivantes :
a - définir un objectif de qualité d'expérience QoE représentant la capacité d'un consommateur Cⱼ à exploiter l'information transférée dans le cadre de chaque application Aₖ mise en oeuvre dans le réseau et un niveau de Criticité des Consommateurs Cⱼ et/ou des Applications Aₖ représentant l'importance relative desdites Applications Aₖ et/ou desdits Consommateurs Cⱼ,
b - déterminer de façon continue au moins un paramètre représentatif de la qualité réelle d'expérience 'QoE' pour au moins un consommateur,
c - déterminer dynamiquement des consignes de fonctionnement du transfert d'information depuis les producteurs Pᵢ jusqu'aux consommateurs Cⱼ en fonction des moyens de transfert disponibles,
d - adapter dynamiquement et continuellement lesdits moyens de transfert d'information en fonction des consignes définies à l'étape c).

Le procédé selon l'invention comporte en outre les étapes suivantes :
- déterminer des règles d'arbitrage entre différents flux d'informations échangés à travers le réseau pour l'utilisation des moyens de transfert,
- déterminer des règles d'usage des moyens de transfert de manière à attribuer lesdits moyens en fonction du type de flux,
- déterminer les types d'adaptation de flux à effectuer lors du transfert,
- paramétrer chaque adaptation définie à l'étape précédente de manière à exploiter l'espace de valeurs possibles desdits paramètres de fonctionnement pour mieux satisfaire la totalité des besoins des applications exploitant les informations transmises via le réseau enajustant dynamiquement les consignes de fonctionnement du transfert d'information en fonction, d'une part, des effets sur le transfert des mécanismes d'accélération sélective, de compression et de fiabilisation, et d'autre part, de l'impact sur la qualité d'exploitation 'QoE' perçue par le consommateur des informations,et en ajustant dynamiquement les paramètres de fonctionnement des mécanismes d'accélération sélective, de compression et de protection de manière à diminuer la charge émise dans le réseau tout en maîtrisant la qualité d'exploitation 'QoE' perçue par le consommateur des informations.

Selon l'invention, en cas d'un flux contrôlé de bout en bout, ladite adaptation comporte au moins une accélération sélective permettant une utilisation des ressources du réseau optimisant les performances des applications exploitant les informations transmises via ledit réseau.

Selon l'invention, en cas d'un flux à fortes redondances d'information, ladite adaptation comporte au moins une compression des informations transitant via le réseau.

Selon l'invention, en cas d'un ensemble de flux à redondances d'information, ladite adaptation comporte une restitution de l'information par une indexation et une mémorisation temporaire des informations redondantes.

Selon l'invention, en cas de flux élastiques, ladite adaptation comporte une répartition dynamique des débits d'entrée dans le réseau pour chaque type de flux.

Selon l'invention, en cas de flux échangé en temps réel, ladite adaptation comporte au moins une optimisation de l'intégrité de l'information par des mécanismes de fiabilisation.

Selon l'invention, en cas de flux pouvant s'écouler par plusieurs chemins, ladite adaptation comporte une sélection d'un chemin optimal.

Selon l'invention, en cas de transferts d'informations audio, le paramètre représentatif de la qualité d'exploitation 'QoE' est le MOS (Mean Opinion Score) mesuré par des algorithmes d'estimation de la qualité audible.

Selon l'invention, en cas de transfert d'informations vidéo, le paramètre représentatif de la qualité d'exploitation 'QoE' est un MDI (Media Delivery Index) mesuré par des algorithmes d'estimation de la qualité visuelle.

Selon l'invention, en cas d'applications procédant à des interactions client-serveur, le paramètre représentatif de la qualité d'exploitation 'QoE' est le délai de transaction caractérisé par le temps d'attente du consommateur entre l'envoi de sa requête à un producteur d'information et la réception de la dernière unité d'information produite pour cette requête.

Selon l'invention, en cas de transfert d'informations sous forme de paquets transmis sans transformation dynamique prenant en compte l'état du réseau, l'état de synchronisation Producteur-Consommateur ou le contenu desdits paquets, le paramètre représentatif de la qualité d'exploitation 'QoE' est l'un des paramètres suivants : le délai absolu de transfert des paquets, la gigue de ces paquets, le taux de pertes paquets ou un débit de transfert.

Dans tous les cas où une multiplicité d'indicateurs intervient pour caractériser la performance perçue, le paramètre représentatif de la qualité d'exploitation 'QoE' est un indice AQS (pour Application Quality Score) représentant le taux de disponibilité de la totalité des objectifs de performance fixés pour une application donnée.

Le procédé selon l'invention est mis en oeuvre par un dispositif d'optimisation du transfert d'informations dans un réseau de télécommunication comportant une pluralité de producteurs d'informations, une pluralité de consommateurs d'informations et des moyens de transfert desdites informations entre lesdits producteurs et lesdits consommateurs, ledit dispositif comporte des moyens pour mettre en oeuvre le procédé selon l'invention.

Préférentiellement, ce dispositif comporte une pluralité de modules distribués comportant :
- un module M1 chargé de discriminer les flux d'information de producteurs et d'applications exploitant lesdits flux,
- un module M2 chargé d'adapter les flux d'information reconnus afin de réaliser un transfert d'information conforme à des critères et des priorités optimisant la qualité d'exploitation 'QoE' perçue par le consommateur des informations,
- un module M3 chargé de quantifier ladite qualité d'exploitation 'QoE' perçue par le consommateur des informations,
- un module M4 chargé d'estimer les moyens de transfert disponibles au sein dudit réseau,
- un module M5 chargé de sélectionner les paramètres de transfert optimisant ladite qualité d'exploitation 'QoE',
- un module M6 chargé de coordonner les modules précédents afin de mettre en oeuvre une politique choisie de maximisation de la performance des applications exploitant les informations échangées via le réseau.

Pour sélectionner les paramètres de transfert optimisant ladite qualité d'exploitation 'QoE, ledit module M5 comporte un logiciel mettant en oeuvre soit un traitement à base de logique floue, soit un traitement basé sur des réseaux bayesiens, soit un traitement basé sur des arbres de décision, soit un traitement basé sur des réseaux de neurones, ou bien un traitement basé sur des modèles empiriques.

Grâce à l'invention la complexité du paramétrage d'un tel dispositif est réduite.

En outre, il n'est pas nécessaire de définir des paramètres propres aux moyens de transfert et/ou à la consommation d'information, et il n'est pas non plus nécessaire de réviser les paramètres lorsque les moyens de transfert et/ou la consommation d'information varient.

Par ailleurs, la performance perçue n'est plus assujettie au bon paramétrage des mécanismes en fonction des moyens de transfert et/ou de la consommation d'information.

### BRÈVE DESCRIPTION DES DESSINS

D'autres caractéristiques et avantages de l'invention ressortiront de la description qui va suivre, prise à titre d'exemple non limitatif, en référence aux figures annexées dans lesquelles :
- la figure 1 représente un schéma général d'un système d'information distribué autour d'un réseau dans lequel est mis en oeuvre le procédé selon l'invention,
- la figure 2 représente un schéma illustrant l'adaptation de la fonction de transfert des flux d'information,
- la figure 3 représente un synoptique du dispositif selon l'invention,
- la figure 4 représente une traduction d'indicateurs de QoE en gabarits SLS cibles,
- la figure 5 illustre un processus de déclenchement de dispositif de transformation de flux piloté par des indicateurs QoE,
- la figure 6 représente la projection d'une QoE auditive (flux G.711 qualifié par un MOS ITU) sur un plan de deux paramètres SLS perte et délais.

### EXPOSÉ DÉTAILLÉ DE MODES DE RÉALISATION PARTICULIERS

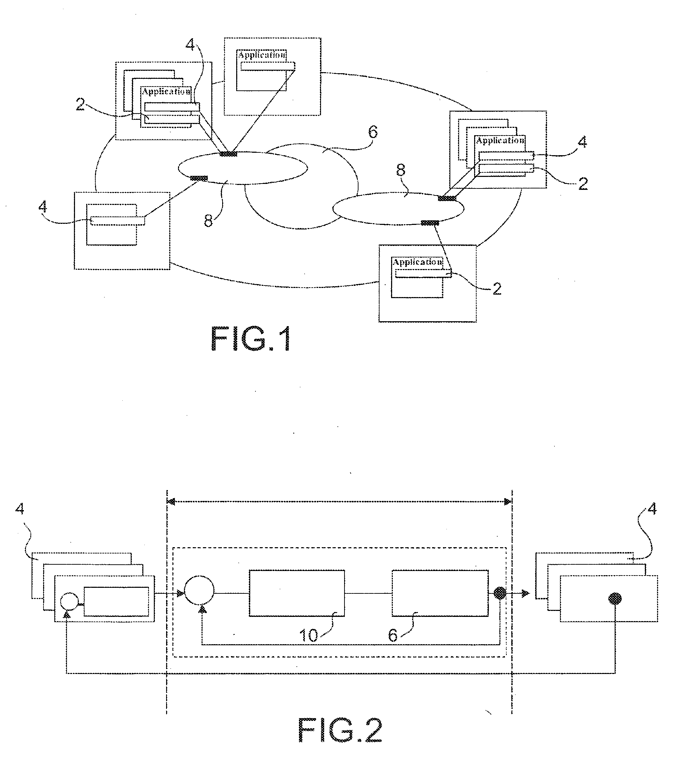

Le réseau illustré par la figure 1, comporte une pluralité de producteurs d'informations Pᵢ 2, une pluralité de consommateurs d'informations Cⱼ 4, et des moyens de transfert desdites informations entre lesdits producteurs 2 et lesdits consommateurs 4 dans le cadre d'une pluralité d'applications Aₖ.

Dans la suite de cette description, les moyens de transfert désignent l'ensemble des mécanismes permettant la livraison d'information selon un protocole d'échange défini entre producteurs 2 et consommateurs 4, le terme communication désignant à la fois le transfert d'information et le protocole d'échange entre entités communicantes ou entre entités communicantes et intermédiaires.

La Consommation d'information au sein du réseau de communication représente l'ensemble des informations exploitables par les Consommateurs et délivrées par les producteurs 2 à chaque instant.

La performance perçue par les consommateurs 4 dans le cadre d'une application Aₖ représente la capacité de ces consommateurs à faire un usage productif de l'information transférée. Par la suite le terme « End-user QoE » (Quality of Experience) ou « QoE » sera utilisé comme synonyme de la performance perçue par les consommateurs 4.

Les producteurs 2 et les consommateurs 4 sont considérés au sens d'applications utilisant des ressources logicielles et/ou matérielles en vue de fournir un service au consommateur final.

Les applications peuvent être des applications de communication multimédia telles que la téléphonie, la visiophonie, la vidéoconférence, des applications de distribution multimédia telles que la vidéo à la demande, les diffusions, les syndications de contenu, des applications de consultation telles que les annuaires, les services interactifs WeB, des applications de partage d'information telles que les échanges peer-to-peer, les bases de données réparties, et plus généralement, des applications informatiques dont les éléments s'exécutent sur des machines éloignées et, se synchronisent et échangent de l'information à travers le réseau.

En référence à la figure 1, les producteurs 2 et les consommateurs 4 sont reliés à un réseau de transit 6 via une pluralité de réseaux d'accès 8.

Les participants (machines ou individus) d'une application en réseau représentés sur la figure 1 ont des rôles de consommateurs et de producteurs d'information. Ces rôles peuvent changer au cours de la vie d'une application, par exemple lors d'une session.

Ces participants se rattachent au réseau en des points géographiques ou administratifs et, vu du réseau, ils forment un tout dénommé Usager. Un usager peut être une agence, une entreprise ou encore un individu itinérant. Les technologies de transport employées peuvent être filaires ou sans fil.

La présente invention tire parti de l'uniformité apportée par les réseaux de télécommunication en mode paquet se caractérisant par le fait que l'information numérique est transportée d'un point à un autre en groupes appelés paquets, essentiellement constitués d'un en-tête contenant les directives d'acheminement et des données d'informations. Les séquences de paquets d'un même transfert d'informations sont appelées flux d'information. Ces flux sont caractérisés par une fonction temporelle.

La technologie principalement utilisée actuellement pour l'accès à ces réseaux de télécommunication en mode paquet est le protocole IP (Internet Protocol). Ce protocole est préservé de bout en bout même si des techniques d'optimisation et d'encapsulation peuvent sur certains segments effectuer des translations de structure de transport.

Les exemples les plus connus de segments de réseaux de télécommunication en mode paquet sont les réseaux DVB, les réseaux MAC IEEE (Ethernet, WiFi, WiMax), les réseaux MPLS.

Le réseau de transit 6 représente une capacité de transport fortement partagée entre une multitude d'usagers et/ou réseaux privés. La caractéristique de cette capacité de transport reste stable vu d'un usager malgré la variabilité de sa propre consommation ou de la production d'information que l'usager peut ne pas signaler explicitement au gestionnaire de réseau par un changement d'abonnement ou une ouverture/fermeture de session.

Les réseaux d'accès 8 représentent des capacités de transport limitées où les flux d'informations subissent de fortes distorsions du fait de débits très inférieurs à ceux des débits d'émission des éléments physiques terminaux, ou de compétitions entre usagers desservis par un réseau d'accès 8. Ces fortes distorsions apparaissent lors de périodes de temps dites congestionnées.

Le dispositif de la présente invention pourra être introduit aux points de rattachement et d'agrégation mais ne nécessite pas un déploiement généralisé.

Le mécanisme d'adaptation du trafic selon l'invention est illustré schématiquement par une boucle courte représentée à la figure 2 reliant l'ensemble des consommateurs 4 à l'ensemble des producteurs 2 via le réseau 6.

Cette boucle comporte un module 10 représentant un adaptateur global qui règle le système dans une position optimale en comparant les résultats de QoE obtenus aux objectifs de QoE prédéfinis.

Le trafic évolue avec la consommation d'information faite à travers le système par l'ensemble des consommateurs 4 depuis l'ensemble des producteurs 2 ainsi qu'avec la caractéristique d'écoulement du réseau.

Une adaptation du transfert d'information stabilise le système à une position optimale. Cette adaptation fonctionne avec des paramètres dynamiques dont les valeurs dépendent des résultats observés.

La figure 2 montre également des asservissements possibles entre les participants. Ces asservissements faits sur une connaissance limitée aux seuls participants en interaction directs et à leur perception restreinte peuvent ralentir leur transfert. Un exemple bien connu est celui du mécanisme TCP défini par l'IETF (pour Internet Engineering Task Force) qui bride les performances dès lors que le réseau utilise des moyens de transmission par satellite.

L'adaptation mise en oeuvre peut consister en :
- une accélération sélective,
- une compression de l'information,
- une suppression des redondances et restitution des informations déjà transférées,
- un conditionnement de flux,
- un ajustement de bande passante,
- une sélection de chemin dans un réseau de transit,
- une sélection de réseau d'accès
- une sélection de réseau de transit.

Un exemple d'accélération sélective connu est un algorithme modifiant le flux de contrôle TCP pour amener un émetteur TCP à utiliser un débit d'émission plus important.

Un standard ISO SCPS-TP a été défini pour améliorer l'interopérabilité des acteurs des transmissions par satellite. L'accélération est sélective du fait de son application à certains flux, par exemple, les flux s'écoulant à travers des moyens de transmission par satellite qui subissent des délais de transmission important.

D'autres critères de sélection peuvent être introduits de manière améliorer la QoE plutôt qu'améliorer a priori le réseau.

La présente invention concerne l'orchestration et le paramétrage (valeurs initiales, valeurs cibles pour les mécanismes adaptatifs, critères de sélection pour les mécanismes à choix multiples, critères d'optimisation) des mécanismes d'adaptation et non pas le fonctionnement de ces mécanismes.

Le pilotage du système est conduit par des objectifs de QoE et une politique de maximisation de la QoE.

Dans un mode préféré de mise en oeuvre, le procédé selon l'invention comporte une phase consistant à définir, d'une part, des objectifs de QoE représentant les résultats attendus dans les situations de congestion où le système de transfert ne peut pas satisfaire une performance maximale à chaque application, et d'autre part, une politique de maximisation consistant en un modèle de conduite qui définit les directives d'arbitrage et, éventuellement, les tactiques pour maintenir le système dans un fonctionnement optimal.

A cet effet, le procédé selon l'invention est basé sur des algorithmes de transfert qui traitent les flux d'information de manière transparente aux applications et utilisent au mieux les capacités du réseau. Ces algorithmes sont spécialisés par type de flux d'information et sont mis en oeuvre dans des moyens d'adaptation.

Préférentiellement, les algorithmes appliqués sont fonction de l'environnement évoluant avec les besoins des applications, les capacités du réseau et les moyens d'adaptation disponibles.

Le choix de ces algorithmes est fait en suivant les performances de QoE obtenues et en évaluant l'écart avec les objectifs attendus.

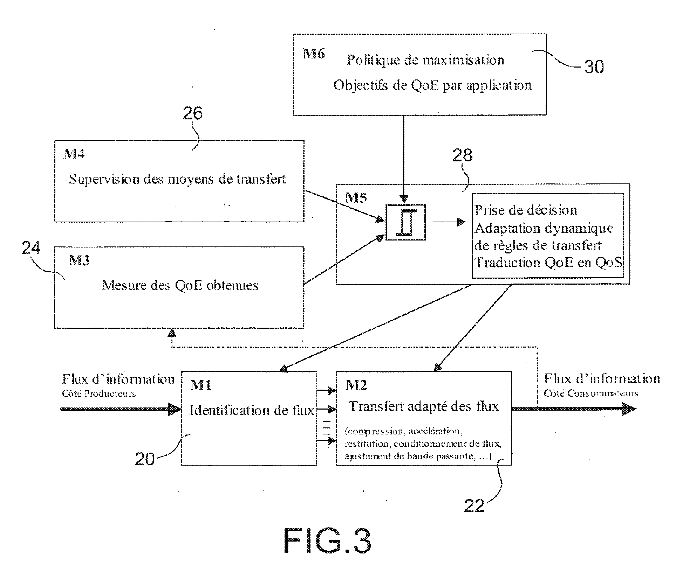

La figure 3 illustre schématiquement un dispositif permettant de mettre en oeuvre le procédé selon l'invention. Ce dispositif comporte :
- un module M1 20 chargé de discriminer les flux d'information de producteurs 2 et d'applications Aₖ exploitant lesdits flux,
- un module M2 22 chargé d'adapter les flux d'information reconnus afin de réaliser un transfert d'information conforme à des critères et des priorités optimisant la qualité d'exploitation 'QoE' perçue par les consommateurs 4 des informations,
- un module M3 24 chargé de quantifier ladite qualité d'exploitation 'QoE' perçue par les consommateurs 4 des informations,
- un module M4 26 chargé d'estimer les moyens de transfert disponibles au sein dudit réseau,
- un module M5 28 chargé de sélectionner les paramètres de transfert optimisant ladite qualité d'exploitation 'QoE',
- un module M6 30 chargé de coordonner les modules précédents afin de mettre en oeuvre la politique choisie de maximisation de la performance des applications exploitant les informations échangées via le réseau.

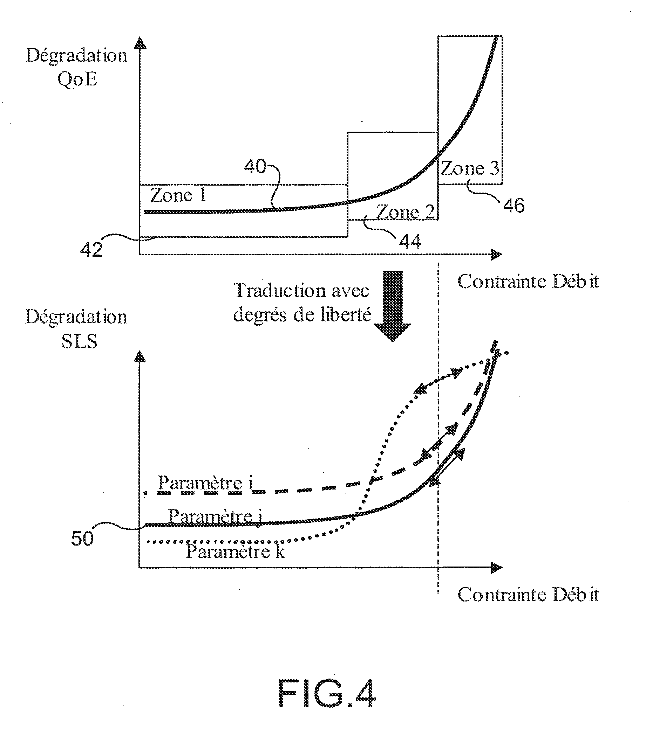

La figure 4 met en évidence la capacité d'adaptation d'une traduction automatique en environnement réel, et non pas a priori, d'un objectif de QoE en paramètres SLS.

La courbe 40 montre trois zones de fonctionnement :
- une première zone où l'indicateur de QoE ne se dégrade que très faiblement avec une fonction de transfert de plus en plus contrainte,
- une seconde zone 44 où l'indicateur de QoE devient très sensible à la fonction de transfert,
- une troisième zone 46 où l'indicateur de QoE se dégrade fortement et sort des limites acceptables.

La seconde courbe montre la traduction de la QoE en multiples paramètres. En particulier, cette courbe illustre des plages de fonctionnement importantes pour chacun des paramètres ainsi que des gradients très différents dans la zone 44.

Chaque traduction crée donc un espace de valeurs possibles.

La maximisation de la performance des applications est obtenue par des mécanismes auto-adaptatifs qui vont suivre les indicateurs de QoE et qui se stabilisent sur l'ensemble des valeurs de paramètres SLS optimaux, par des traductions successives des indicateurs de QoE atteignables en paramètres SLS.

Ainsi, au lieu de régler les mécanismes auto-adaptatifs sur des valeurs de paramètres SLS calculées a priori, ces mécanismes vont exploiter l'espace de valeurs possibles pour mieux satisfaire la totalité des besoins.

Les éléments de base d'adaptation peuvent avoir des effets linéaires et/ou non linéaires sur les paramètres SLS.

La première catégorie comporte les conditionnements de flux et l'ajustement de bande passante, et la seconde catégorie, comporte essentiellement des éléments dénommés dispositifs de transformation.

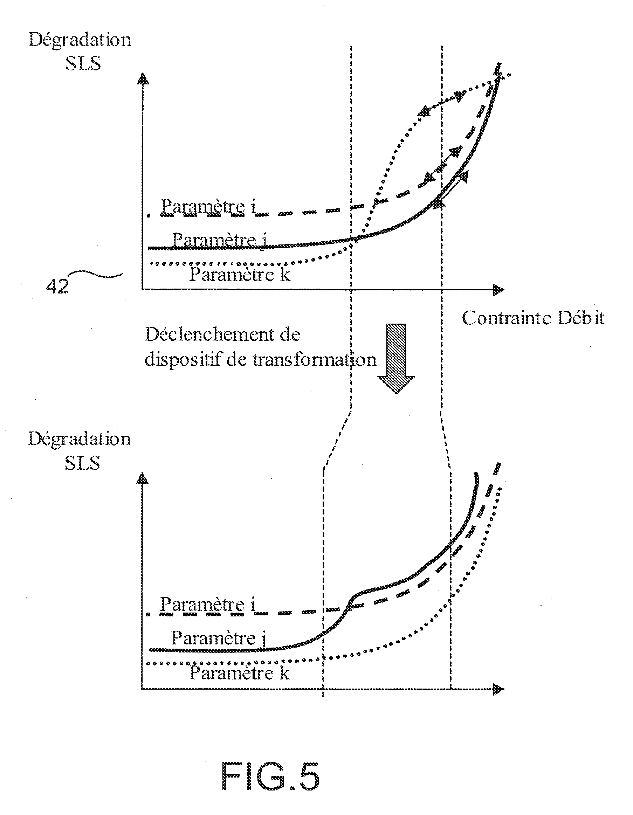

La figure 5 montre l'effet d'un déclenchement d'un dispositif de transformation telle que compression, accélération, fiabilisation,...

Dans les mécanismes connus, la maximisation des performances était basée uniquement sur la paramétrisation SLS de manière à régler les mécanismes d'adaptation. La présente invention permet d'introduire dynamiquement des mécanismes qui vont modifier la fonction de traduction de QoE en paramètres SLS.

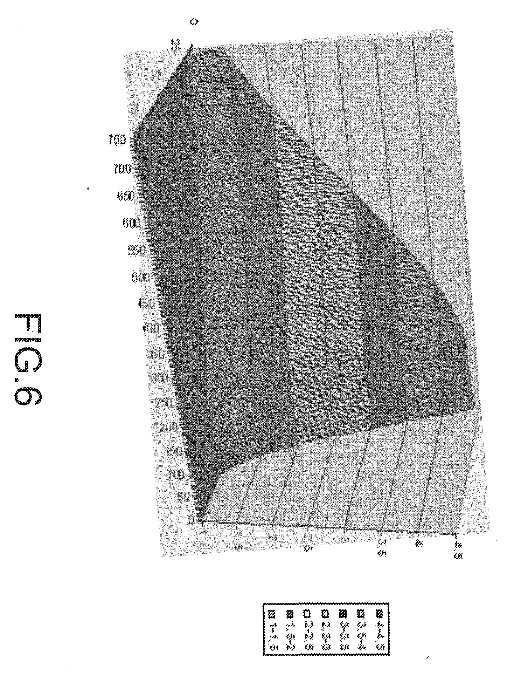

Par exemple, la constatation d'un taux de perte trop élevé (paramètre k sur la figure 6), qui provoque la sortie de la zone 2 mentionnée sur la figure 5, déclenche la mise en oeuvre d'une fiabilisation qui a toutefois le défaut d'introduire un délai (paramètre j sur la figure 6). Cette mise en oeuvre déclenchée modifie la fonction de traduction QoE en SLS et donc peut élargir la zone d'équilibre (zone 2) donnant plus de latitude dans le réglage du système.

## Revendications

1. Procédé d'optimisation du transfert d'informations dans un réseau de télécommunication comportant une pluralité de producteurs d'informations Pᵢ, une pluralité de consommateurs d'informations Cⱼ, et des moyens de transfert desdites informations entre lesdits producteurs et lesdits consommateurs dans le cadre d'une pluralité d'applications Aₖ,
comportant les étapes suivantes :
a - définir un objectif de qualité d'expérience QoE représentant la capacité d'un consommateur Cⱼ à exploiter l'information transférée dans le cadre de chaque application Aₖ mise en oeuvre dans le réseau et un niveau de Criticité des Consommateurs Cⱼ et/ou des Applications Aₖ représentant l'importance relative desdites Applications Aₖ et/ou desdits Consommateurs Cⱼ,
b - déterminer de façon continue au moins un paramètre représentatif de la qualité réelle d'expérience 'QoE' pour au moins un consommateur,
c - déterminer dynamiquement des consignes de fonctionnement du transfert d'information depuis les producteurs Pᵢ jusqu'aux consommateurs Cⱼ en fonction des moyens de transfert disponibles,
d - adapter dynamiquement et continuellement lesdits moyens de transfert d'information en fonction des consignes définies à l'étape c), procédé **caractérisé en ce qu'**il comporte ou outre les étapes suivantes
- déterminer des règles d'arbitrage entre différents flux d'informations échangés à travers le réseau pour l'utilisation des moyens de transfert,
- déterminer des règles d'usage des moyens de transfert de manière à attribuer lesdits moyens en fonction du type de flux,
- déterminer les types d'adaptation de flux à effectuer lors du transfert,
- paramétrer chaque adaptation définie à l'étape précédente de manière à exploiter l'espace de valeurs possibles desdits paramètres de fonctionnement pour mieux satisfaire la totalité des besoins des applications exploitant les informations transmises via le réseau en ajustant dynamiquement les consignes de fonctionnement du transfert d'information en fonction, d'une part, des effets sur le transfert des mécanismes d'accélération sélective, de compression et de fiabilisation, et d'autre part, de l'impact sur la qualité d'exploitation 'QoE' perçue par le consommateur des informations, et en ajustant dynamiquement les paramètres de fonctionnement des mécanismes d'accélération sélective, de compression et de protection de manière à diminuer la charge émise dans le réseau tout en maîtrisant la qualité d'exploitation 'QoE' perçue par le consommateur des informations.

2. Procédé selon la revendication 1, **caractérisé en ce qu'**en cas d'un flux contrôlé de bout en bout, ladite adaptation comporte au moins une accélération sélective permettant une utilisation des ressources du réseau optimisant les performances des applications exploitant les informations transmises via le réseau.

3. Procédé selon la revendication 1 , **caractérisé en ce qu'**en cas d'un flux à fortes redondances d'information, ladite adaptation comporte au moins une compression des informations transitant via le réseau.

4. Procédé selon 1 revendication 1, **caractérisé en ce qu'**en cas d'un ensemble de flux à redondances d'information, ladite adaptation comporte une restitution de l'information par une indexation et une mémorisation temporaire des informations redondantes.

5. Procédé selon la revendication 1, **caractérisé en ce qu'**en cas de flux élastiques, ladite adaptation comporte une répartition dynamique des débits d'entrée dans le réseau pour chaque type de flux.

6. Procédé selon 1 revendication 1, **caractérisé en ce qu'**en cas de flux échangé en temps réel, ladite adaptation comporte au moins une optimisation de l'intégrité de l'information par des mécanismes de fiabilisation.

7. Procédé selon 1 revendication 1, **caractérisé en ce qu'**en cas de flux pouvant s'écouler par plusieurs chemins, ladite adaptation comporte une sélection d'un chemin optimal.

8. procédé selon l'une des revendications 1 à 7 dans lequel, en cas de transferts d'informations audio, le paramètre représentatif de la qualité d'exploitation 'QoE' est le MOS (Mean Opinion Score) mesuré par des algorithmes d'estimation de la qualité audible.

9. Procédé selon l'une des revendications 1 à 7 dans lequel, en cas de transfert d'informations vidéo, le paramètre représentatif de la qualité d'exploitation 'QoE' est un MDI (Media Delivery Index) mesuré par des algorithmes d'estimation de la qualité visuelle.

10. Procédé selon l'une des revendications 1 à 7 dans lequel, en cas d'applications procédant à des interactions client-serveur, le paramètre représentatif de la qualité d'exploitation 'QoE' est le délai de transaction **caractérisé par** le temps d'attente du consommateur entre l'envoi de sa requête à un producteur d'information et la réception de la dernière unité d'information produite pour cette requête.

11. Procédé selon l'une des revendications 1 à 7 dans lequel, en cas de transfert d'informations sous forme de paquets transmis sans transformation dynamique prenant en compte l'état du réseau, l'état de synchronisation Producteur-Consommateur ou le contenu desdits paquets, le paramètre représentatif de la qualité d'exploitation 'QoE' est l'un des paramètres suivants : le délai absolu de transfert des paquets, la gigue de ces paquets, le taux de perte paquets ou un débit de transfert.

12. Procédé selon l'une des revendications 1 à 7 dans lequel, dans tous les cas où une multiplicité d'indicateurs intervient pour caractériser la performance perçue, le paramètre représentatif de la qualité d'exploitation 'QoE' est un indice AQS (pour Application Quality Score) représentant le taux de disponibilité de la totalité des objectifs de performance fixés pour une application donnée.

13. Dispositif d'optimisation du transfert d'informations dans un réseau de télécommunication comportant une pluralité de producteurs d'informations, une pluralité de consommateurs d'informations et des moyens de transfert desdites informations entre lesdits producteurs et lesdits consommateurs, ledit dispositif étant **caractérisé en ce qu'** il comporte des moyens pour mettre en oeuvre le procédé selon la revendication 1.

14. Dispositif selon la revendication 13, **caractérisé en ce qu'**il comporte une pluralité de modules distribués comportant:
- un module M1 (20) chargé de discriminer les flux d'information de producteurs et d'applications exploitant lesdits flux,
- un module M2 (22) chargé d'adapter les flux d'information reconnus afin de réaliser un transfert d'information conforme à des critères et des priorités optimisant la qualité d'exploitation 'QoE' perçue par le consommateur des informations,
- un module M3 (24) chargé de quantifier ladite qualité d'exploitation 'QoE' perçue par le consommateur des informations,
- un module M4 (26) chargé d'estimer les moyens de transfert disponibles au sein dudit réseau,
- un module M5 (28) chargé de sélectionner les paramètres de transfert optimisant ladite qualité d'exploitation 'QoE',
- un module M6 (30) chargé de coordonner les modules M1 à M6 afin de mettre en oeuvre une politique choisie de maximisation de la performance des applications exploitant les informations échangées via le réseau.

15. Dispositif selon la revendication 14, **caractérisé en ce que** pour sélectionner les paramètres de transfert optimisant ladite qualité d'exploitation 'QoE, ledit module M5 (28) comporte un logiciel mettant en oeuvre soit un traitement à base de logique floue, soit un traitement basé sur des réseaux bayesiens, soit un traitement basé sur des arbres de décision, soit un traitement basé sur des réseaux de neurones, ou bien un traitement basé sur des modèles empiriques.

## Patentansprüche

1. Verfahren zur Optimierung der Übertragung von Informationen in einem Telekommunikationsnetz, welches eine Vielzahl von Informationserzeugern Pᵢ, eine Vielzahl von Informationsverbrauchern Cⱼ, sowie Übertragunseinrichtungen für diese Informationen zwischen den besagten Erzeugern und den besagten Verbrauchern im Rahmen einer Vielzahl von Anwendungen Aₖ aufweist,
wobei das Verfahren die folgenden Schritte umfasst:
a) - Definition einer Zielvorgabe für die Erlebnisqualität QoE, welche die Leistungsfähigkeit bzw. Kapazität eines Verbrauchers Cⱼ wiedergibt, die übertragenenen Informationen im Rahmen jeder Anwendung Aₖ, welche in dem Netz ausgeführt wird, auszunutzen, sowie Definition einer Kritikalitätsstufe der Verbraucher Cⱼ und/oder der Anwendungen Aₖ, welche die relative Bedeutung der besagten Anwendungen Aₖ und/oder der Verbraucher Cⱼ wiedergibt;
b) - Kontinuierliche Bestimmung zumindest eines Parameters, welcher die wirkliche bzw. reelle Erlebnisqualität "QoE" für mindestens einen Verbraucher wiedergibt;
c) - Dynamische Bestimmung von Betriebsvorschriften für die Informationsübertragung von den Erzeugern Pᵢ bis zu den Verbrauchern Cⱼ in Abhängigkeit von den verfügbaren Übertragungseinrichtungen;
d) - Dynamische und kontinuierliche Anpassung der besagten Informationsübertragunseinrichtungen gemäß den in Schritt c) definierten Vorschriften, wobei das Verfahren **dadurch gekennzeichnet ist, dass** es darüberhinaus die folgenden Schritte umfasst:
- Bestimmung einer Schiedsordnung zwischen unterschiedlichen Informationsströmen, welche über das Netz zur Nutzung der Übertragungseinrichtungen ausgetauscht werden;
- Bestimmung von Regeln für die Nutzung von Übertragungseinrichtungen, so dass die Übertragungseinrichtungen gemäß der Art der Informationsströme zugeordnet werden;
- Bestimmung der Arten von Anpassung von Informationsströmen, welche während der Übertragung erfolgt;
- Parametrieren einer jeden Anpassung, welche bei dem vorhergehenden Schritt definiert worden ist, derart, dass der Raum möglicher Werte der Betriebsparameter ausgenutzt wird, um den Gesamtbedarf der Anwendungen, welche die über das Netz übertragenen Informationen nutzen, besser zu decken, indem sie die Betriebsvorschriften für die Informationsübertragung zum einen entsprechend der Auswirkungen auf die Übertragung von Mechanismen für die selektive Beschleunigung, die Verdichtung und die Zuverlässigkeitsverbesserung, und zum anderen entsprechend dem Einfluss auf die Nutzungsqualität "QoE", welche von dem Informationsverbraucher erfasst wird, dynamisch anpassen, und durch dynamische Anpassung der Betriebsparameter der Mechanismen für eine selektive Beschleunigung, Verdichtung und für den Schutz derart, dass die in dem Netz emittierte Ladung reduziert wird, während jedenfalls die von dem Informationsverbraucher erfasste Nutzerqualität "QoE" beherrscht wird.

2. Verfahren nach Anspruch 1, **dadurch gekennzeichnet, dass** im Falle eines von Anfang bis Ende gesteuerten Datenstroms die besagte Anpassung zumindest eine selektive Beschleunigung umfasst, welche eine Nutzung der Netzressourcen erlaubt, wodurch die Leistungen der Anwendungen, welche die über das Netz übertragenen Informationen nutzen, optimiert werden.

3. Verfahren nach Anspruch 1, **dadurch gekennzeichnet, dass** im Falle eines Stroms mit hoher Informationsredundanz die besagte Anpassung zumindest eine Verdichtung der das Netz durchquerenden Informationen umfasst.

4. Verfahren nach Anspruch 1, **dadurch gekennzeichnet, dass** im Falle einer Menge von Strömen mit hoher Informationsredundanz die besagte Anpassung eine Wiedergabe der Informationen durch eine Indexierung und eine temporäre Speicherung der redundanten Informationen umfasst.

5. Verfahren nach Anspruch 1, **dadurch gekennzeichnet, dass** im Falle elastischer Ströme, die besagte Anpassung eine dynamische Verteilung des Eingangsvolumenstroms in das Netz für jede Art von Strom umfasst.

6. Verfahren nach Anspruch 1, **dadurch gekennzeichnet, dass** im Falle eines in Echtzeit wechselnden Stroms, die besagte Anpassung zumindest eine Optimierung der Unversehrtheit der Informationen durch Zuverlässigkeitsmechanismen umfasst.

7. Verfahren nach Anspruch 1, **dadurch gekennzeichnet, dass** in dem Fall, dass der Fluss durch mehrere Wege fließen kann, die besagte Anpassung eine Auswahl eines optimalen Wegs umfasst.

8. Verfahren nach einem der Ansprüche 1 bis 7, bei welchem im Falle von Übertragungen von Audioinformationen, der die Nutzungsqualität "QoE" wiedergebende Parameter der MOS (Mean Opinion Score) ist, welcher durch Algorithmen zur Abschätzung der hörbaren Qualität gemessen wird.

9. Verfahren nach einem der Ansprüche 1 bis 7, bei welchem im Falle von Übertragungen von Videoinformationen, der die Nutzungsqualität "QoE" wiedergebende Parameter ein MDI (Media Delivery Index) ist, welcher durch Algorithmen zur Abschätzung der visuellen Qualität gemessen wird.

10. Verfahren nach einem der Ansprüche 1 bis 7, bei welchem im Falle von Anwendungen, welche in Client-Server-Interaktionen ausgeführt werden, der die Nutzungsqualität "QoE" wiedergebende Parameter die Transaktionsverzögerung ist, welche durch die Wartezeit des Verbrauchers zwischen dem Versand seiner Anfrage an einen Informationserzeuger und dem Empfang der letzten Informationseinheit für diese Anfrage gekennzeichnet ist.

11. Verfahren nach einem der Ansprüche 1 bis 7, bei welchem im Falle einer Übertragung von Informationen in Form von Paketen, welche ohne dynamische Umwandlung übertragen werden, der Netzzustand, Synchronisationszustand zwischen Erzeuger-Verbraucher oder der Inhalt der Pakete berücksichtigt wird, wobei der die Nutzungsqualität "QoE" wiedergebende Parameter einer der nachfolgenden Parameter ist: die absolute Verzögerung der Paketübertragung, der Jitter der Pakete, die Paketverlustquote oder eine Übertragungsgeschwindigkeit ist.

12. Verfahren nach einem der Ansprüche 1 bis 7, bei welchem in allen Fällen, in denen eine Vielzahl von Anzeigegeräten eingeschaltet wird, um die erfasste Leistung zu charakterisieren, der die Nutzungsqualität "QoE" wiedergebende Parameter ein AQS-Index (Application Quality Score) ist, welcher die Verfügbarkeit der Gesamtheit von Leistungszielvorgaben wiedergibt, welche für eine gegebene Anwendung festgelegt werden.

13. Vorrichtung zur Optimierung einer Informationsübertragung in einem Telekommunikationsnetz, welches eine Vielzahl von Informationserzeugern, eine Vielzahl von Informationsverbrauchern und Übertragungseinrichtungen für die Informationen zwischen den besagten Erzeugern und den besagten Verbrauchern umfasst, wobei die Vorrichtung **dadurch gekennzeichnet ist, dass** sie Einrichtungen zur Ausführung des Verfahrens nach Anspruch 1 umfasst.

14. Vorrichtung nach Anspruch 13, **dadurch gekennzeichnet, dass** sie eine Vielzahl von verteilten Modulen aufweist, welche Folgendes umfassen:
- ein Modul M1 (20), welches zur Unterscheidung der Informationsströme bzw. - flüsse der Erzeuger und der diese Ströme nutzenden Anwendungen ausgelegt ist;
- ein Modul M2 (22), welches zur Anpassung der erkannten Informationsströme ausgelegt ist, um eine Informationsübertragung zu realisieren, welche den Kriterien und den Prioritäten, welche die von dem Verbraucher der Informationen erfasste Nutzungsqualität "QoE" optimieren, entspricht;
- ein Modul M3 (24), welches zur Quantifizierung der besagten von dem Verbraucher der Informationen erfassten Nutzungsqualität "QoE" ausgelegt ist;
- ein Modul M4 (26), welches zur Beurteilung der in dem Netz verfügbaren Übertragungseinrichtungen ausgelegt ist;
- ein Modul M5 (28), welches zur Auswahl der Übertragungsparameter ausgelegt ist, welche die besagte Nutzungsqualität "QoE" optimieren;
- ein Modul M6 (30), welches zur Koordinierung der Module M1 bis M6 ausgelegt ist, um eine gewählte Strategie der Maximierung der Leistung der Anwendungen, welche die über das Netz ausgetauschten Informationen nutzen, umzusetzen.

15. Vorrichtung nach Anspruch 14, **dadurch gekennzeichnet, dass** zur Auswahl der Übertragungsparameter, welche die besagte Nutzungsqualität "QoE" optimieren, das besagte Modul M5 (28) eine Software aufweist, wobei die Umsetzung entweder eine Verarbeitung auf Basis einer unscharfen Logik, eine Verarbeitung auf Basis von Netzwerken nach Bayes, eine Verarbeitung auf der Basis von Entscheidungsbäumen, eine Verarbeitung auf der Basis von neuronalen Netzwerken, oder auch eine Behandlung auf der Basis von empirischen Modellen ist.

## Claims

1. Method for optimising the transfer of information in a telecommunications network comprising a plurality of producers of information Pᵢ, a plurality of consumers of information Cⱼ, and means of transfer of said information between said producers and said consumers within the framework of a plurality of applications Aₖ,
method comprising the following steps:
a - defining an objective of quality of experience QoE representing the capacity of a consumer Cⱼ to make use of the information transferred within the framework of each application Aₖ implemented in the network and a level of Criticality of the Consumers Cⱼ and/or of the Applications Aₖ representing the relative importance of said Applications Aₖ and/or of said Consumers Cⱼ,
b - determining continuously at least one parameter representing the actual quality of experience 'QoE' for at least one consumer,
c - determining dynamically the operating instructions for the transfer of information from the producers Pᵢ to the consumers Cⱼ according to the means of transfer available,
d - adapting dynamically and continuously said means of transfer of information according to the instructions defined in the step c),
- determining rules of arbitration between different data flow exchanged via the network for the use of the means of transfer,
- determining rules for using means of transfer in such a way as to allocate said means according to the type of flow,
- determining the types of adaptation of flows to be carried out during the transfer,
- configuring each adaptation defined in the preceding step in such a way as to make use of the space of possible values of said operating parameters in order to better satisfy the totality of the needs of the applications making use of the information transmitted via the network by dynamically adjusting the operating instructions for the transfer of information according, on the one hand, to the effects on the transfer of the mechanisms for selective acceleration, compression and enhancing reliability, and on the other hand, to the impact on the quality of operation 'QoE' perceived by the consumer of the information, and by dynamically adjusting dynamically the operating parameters of the mechanisms for selective acceleration, compression and protection in such a way as to reduce the load emitted into the network while still controlling the quality of operation 'QoE' perceived by the consumer of the information.

2. Method according to claims 1 and 2, **characterised in that** in the event of a flow controlled from end to end, said adaptation comprises at least one selective acceleration making it possible to use the resources of the network optimising the performance of the applications making use of the information transmitted via the network.

3. Method according to claims 1, **characterised in that** in the event of a flow with high data redundancy, said adaptation comprises at least one compression of the information transiting via the network.

4. Method according to claims 1, **characterised in that** in the event of a set of flows with redundant information, said adaptation comprises a restitution of the information by an indexing and a temporary memorisation of the redundant information.

5. Method according to claims 1, **characterised in that** in the event of elastic flows, said adaptation comprises a dynamic distribution of input flows in the network for each type of flow.

6. Method according to claims 1, **characterised in that** in the event of a flow exchanged in real time, said adaptation comprises at least one optimisation of the integrity of the information by mechanisms for enhancing reliability.

7. Method according to claims 1, **characterised in that** in the event of a flow that can flow via several paths, said adaptation comprises a selection of an optimal path.

8. Method according to one of claims 1 to 7 wherein, in the event of audio data transfers, the parameter representing the quality of operation 'QoE' is the MOS (Mean Opinion Score) measured by algorithms for estimating the audible quality.

9. Method according to one of claims 1 to 7 wherein, in the event of video data transfers, the parameter representing the quality of operation 'QoE' is an MDI (Media Delivery Index) measured by algorithms for estimating the visual quality.

10. Method according to one of claims 1 to 7 wherein, in the event of applications proceeding with client-server interactions, the parameter representing the quality of operation 'QoE' is the transaction delay **characterised by** the latency of the consumer between the sending of his query to a producer of data and the reception of the last information unit produced for this query.

11. Method according to one of claims 1 to 7 wherein, in the event of a transfer of information in the form of packets transmitted without dynamic transformation taking into account the state of the network, the state of the Producer-Consumer synchronisation or the content of said packets, the parameter representing the quality of operation 'QoE' is one of the following parameters: the absolute transfer latency of the packets, the jitter of these packets, the packet loss rate or a transfer speed.

12. Method according to one of claims 1 to 7 wherein, in all cases wherein a multiplicity of indicators intervenes in order to characterise the perceived performance, the parameter representing the quality of operation 'QoE' is an AQS (for Application Quality Score) index representing the rate of availability of the totality of the performance objectives set for a given application.

13. Device for optimising the transfer of information in a telecommunications network comprising a plurality of producers of information, a plurality of consumers of information and means of transfer of said information between said producers and said consumers, said device being **characterised in that** it comprises means for implementing the method according to claim 1.

14. Device set forth in claim 13, **characterised in that** it comprises a plurality of distributed modules comprising:
- a module M1 (20) in charge of discriminating the flow of data of producers and of applications making use of said flow,
- a module M2 (22) in charge of adapting the recognised flow of data in order to carry out a transfer of information that complies with the criteria and with the priorities optimising the quality of operation 'QoE' perceived by the consumer of the information,
- a module M3 (24) in charge of quantifying said quality of operation 'QoE' perceived by the consumer of the information,
- a module M4 (26) in charge of estimating the means of transfer available within said network,
- a module M5 (28) in charge of selecting the transfer parameters optimising said quality of operation 'QoE',
- a module M6 (30) in charge of coordinating the preceding modules in order to implement a chosen policy of maximising the performance of the applications making use of the information exchanged via the network.

15. Device set forth in claim 14, **characterised in that** in order to select the transfer parameters that optimise said quality of operation 'QoE, said module M5 (28) comprises a software implementing either a fuzzy logic based processing, or a Bayesian network based processing, or a decision tree based processing, or a neural network based processing, or an empirical model based processing.
